# EUROPEAN PATENT APPLICATION

(11) **EP 0 848 363 A2**
(43) Date of publication of application: **17.06.1998**
(21) Application number: 97121633.8
(22) Date of filing: 09.12.1997
(51) Int. Cl.: G07F 15/00, G07F 7/08

(54) **Improvements in or relating to electronic gas meters**

(30) Priority: 16.12.1996 GB 9626075
(71) Applicant: SIEMENS MEASUREMENTS LIMITED, Oldham, Lancashire OL9 7JS (GB)
(72) Inventor: Day, Steven, Lostock, Bolton, BL6 4LW (GB)
(74) Representative: Allen, Derek

(57) **Abstract**

A gas meter has an input line for receiving a supply of gas, an output line for delivering the gas from the meter to a consumer, a credit facility, and a valve means for controlling a flow of gas between the input and the output lines independence upon a state of the valve means, wherein the valve means and credit facility act in combination to cause the valve means to adopt a closed state when the credit facility determines that credit has expired. By providing the valve means with a control means for controlling the state of the valve means, and an engagement mechanism which serves to disengage the control means upon expiry of the credit, and engage the control means when credit is restored, so that the valve means must be manually operated to restore the gas supply, a potentially dangerous situation resulting from gas appliances being left 'on' when the gas supply is switched 'off' is obviated.

## Description

The present invention relates to electronic gas meters and in particular it relates to gas meters having a credit meter facility.

Credit meters operate to cut-off the gas supply to the meter when the credit has expired. When the meter is returned to a credit state, a dangerous situation may occur if the gas was automatically turned on again, because the consumer may have had appliances turned on within the consumer's premises at the time the credit ran out. Therefore, to automatically restore the gas supply could cause a gas leakage by the appliances which are still in a turned on condition.

To overcome this problem, it is necessary for the consumer to manually perform a function whereby the gas supply to the meter can be restored after the meter has recognised that the meter is in credit.

According to the present invention there is provided a gas meter having an input line for receiving a supply of gas to said gas meter, and an output line for delivering said gas from said gas meter, and a credit facility, wherein the flow of gas between said input and output lines is controlled by valve means, said valve means being controlled by said credit facility which causes said valve means to close when said credit facility determines that credit has expired, characterised in that said valve means is provided with control means having an engagement mechanism which serves to disengage said control means upon expiry of credit, and engage said control means when credit is restored, thereby enabling said valve means to be manually operated to restore said gas supply.

The engagement mechanism may comprise a clutch and latch system, and an input shaft which extends through an outer wall of the meter.

The engagement mechanism may further include a pre-load system which is pre-tensioned by rotation of the input shaft, and upon reaching sufficient energy causes the valve means to open.

The pre-load system may be a spring.

The flow of gas through the meter is controlled by a gas cut-off valve. In association with this valve there is provided an engagement mechanism which comprises an input shaft and a clutch and latch engagement system. The input shaft extends through an external wall of the meter to atmosphere from the gas side envelope from within the meter. When the credit facility recognises that there is insufficient credit, it causes the cut-off valve to close. Under these circumstances the input shaft has no action on any internal part of the meter and is effectively isolated by use of the clutch and latch mechanism.

Upon recognition of sufficient credit by the credit facility, the clutch and latch engagement is caused to engage, thereby enabling the input shaft. The input shaft can be turned to pretension the pre-load system, such as a spring, and upon reaching sufficient energy in the pre-load system, the gas cut-off valve is opened in a single continuous movement, and is held open by the latch which is controlled by the meter. The gas cut-off valve will not open until the pre-load energy value has been passed, and the single movement accomplished. The latching of the gas cut-off valve also causes the clutch and the input shaft to be disengaged by either mechanical or electrical means, which can operate automatically or be controlled by the meter.

When the credit has expired, the meter will cause the gas cut-off valve to be closed by releasing the latch and the clutch will remain disengaged.

The input shaft will pass from the gas side envelope to the atmospheric side of the meter through a seal of sufficiently tightness to meet the necessary safety standards. The input shaft is also designed so that it cannot be pulled out or pushed in so as to cause damage to the meter or to the gas seal.

The input shaft may be controlled by a manual handle or via a mechanical operating system.

While the principal advantages and features of the invention have been described above, a greater understanding and appreciation of the invention may be obtained by referring to the drawings and detailed description of the preferred embodiment, presented by way of example only, in which;
FIGURE 1 is a schematic diagram of a gas meter connected in-line to a gas supply pipe supplying gas to various household appliances,
FIGURE 2 shows a block diagram highlighting the various aspects within the gas meter,
FIGURE 3 shows a detailed diagram of a gas meter with the gas cut-off valve in the open configuration,
FIGURE 4 shows a detailed diagram of a gas meter with the gas cut-off valve in the closed configuration.

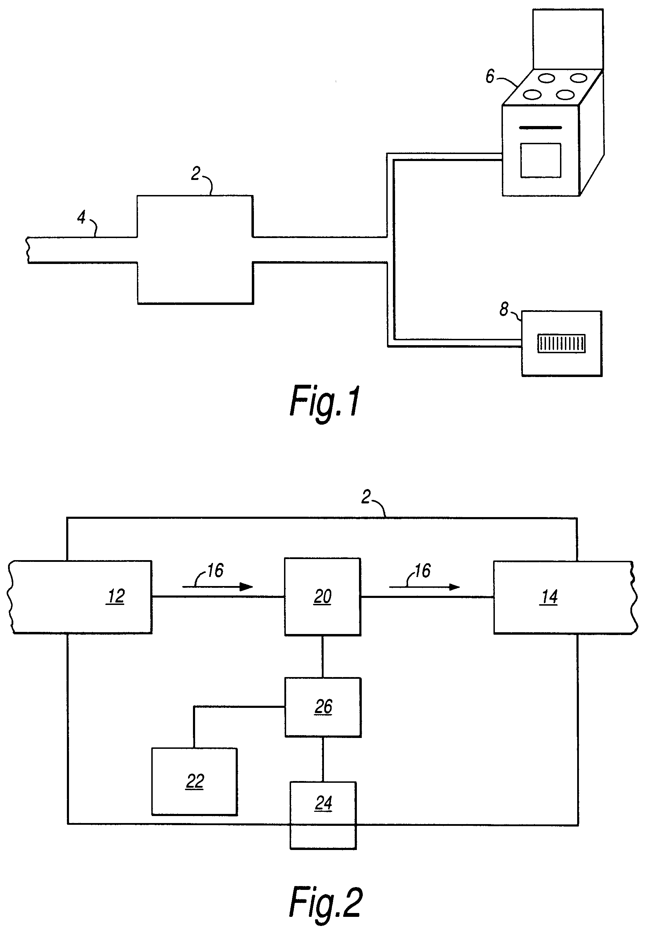

Figure 1 provides a schematic illustration of a gas meter 2 located in-line of a domestic gas supply pipeline 4, which is one application of a gas meter according to the present invention. The gas meter 2 is situated prior to connection of domestic gas supply pipeline 4 to various household appliances, such as a stove 6, and a gas heater 8.

Figure 2 shows a block diagram of the various aspects of the gas meter shown in Figure 1, where parts also appearing in Figure 1 bear identical numerical designation. A gas meter 2, having an input line 12 and an output line 14, has the flow of gas, as indicated by arrows 16, between the input and output lines controlled by a valve means 20. The valve means 20 is controlled by a credit facility 22, which causes the valve means 20 to close when the credit facility 22 determines that credit has expired. This is accomplished via an engagement mechanism 26, which is connected both to the credit facility 22, the valve means 20, and a control means 24. The control means 24 serves as a means of acting upon the valve means 20 to restore the flow of gas. The engagement mechanism 26 further operates to disengage the control means 24 upon expiry of credit, as determined by the credit facility 22, and to engage the control means when credit is restored, as determined by the credit facility 22, thereby enabling the valve means 20, to be manually operated by a control means 24 to restore the flow of gas.

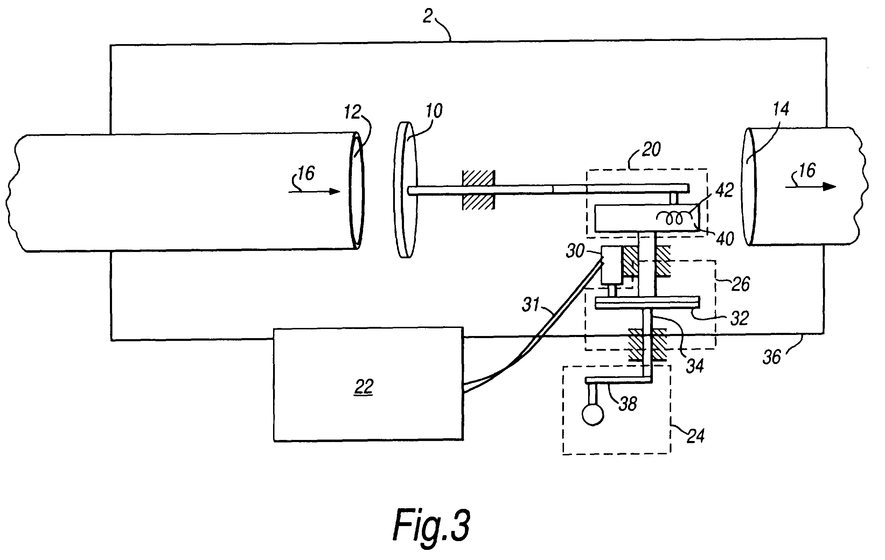

Figure 3 shows a more detailed description of the block diagram shown in Figure 2 where parts also appearing in Figures 1 and 2 bear identical numerical designation. A gas meter 2 is shown with the gas cut-off valve 10 in an open position, thus allowing gas to flow freely from the gas input line 12 through the gas meter and to exit via the gas output line 14 in route to various household appliances, with the arrows 16 indicating the direction of gas flow. A credit facility 22 is connected to a solenoid 30 by a connection means 31, such that when the credit facility is in the positive or yes state, as is the case here, the solenoid is arranged to engage the engagement mechanism 26, which comprises a clutch and latch system 32 and an input shaft 34, which extends through an outer wall 36 of the gas meter 2. The input shaft 34 can be manually turned by a winding handle 38 to enable a valve means 20 to open the gas cut-off valve 10 and allow the free flow of gas. The valve means 20 may be of the type, whereby after enabling the input shaft 34, the winding handle 38 can be manually turned to pretension a pre-load system, such as a spring 42, and upon reaching sufficient energy in the pre-load system, the gas cut-off valve 10 is opened in a single continuous movement. The valve means 20 further comprises of a single position mechanical ratchet device 40, which serves to hold the gas cut-off valve 10 open after the required pre-load energy has been applied to the spring 42 by means of the winding handle 38. A valve means 20 further operates such that upon opening the gas cut-off valve 10, the valve means 20 causes the engagement mechanism 26 to disengage the clutch and latch system 32 and the input shaft 34, either by mechanical or electrical means. This serves to prevent any further turning of the winding handle 38, thereby preventing any damage to the valve means 20.

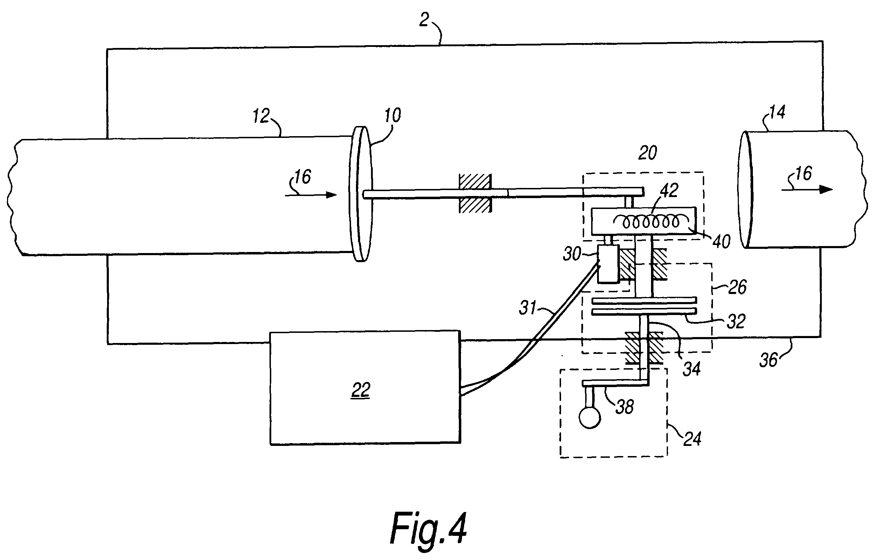

Figure 4 shows the same gas meter 2 as depicted in Figure 3, with parts also appearing in Figure 3 bearing identical numerical designation, except that the gas cut-off valve 10 is now shown in the closed configuration. When the gas meter 2 is in the closed configuration the gas cut-off valve 10 is pressed firmly against the gas input line 12, thus preventing flow of gas. In this configuration, the credit facility 22 is now in the negative or no state, and causes the solenoid 30 to disengage the clutch and latch system 32 and to act upon the valve means 20 such that the single position mechanical ratchet device 40 is released allowing the pretension coil spring 42 to force the gas cut-off valve 10 closed, and whereby the spring tension is sufficient to keep the gas cut-off valve 10 closed against standard gas pipeline pressure. When the gas meter 2 is in the closed configuration, the engagement mechanism 26 will remain in a state whereby the clutch and latch system 32 will stay disengaged, thus preventing the gas cut-off valve 10 from being opened via the control means 24, for as long as the credit facility 22 remains in the negative state.

As will be appreciated by those skilled in the art, various modifications may be made to the embodiment hereinbefore described without departing from the scope of the present invention.

## Claims

1. A gas meter having an input line for receiving a supply of gas to said gas meter, and an output line for delivering said gas from said gas meter, and a credit facility, wherein the flow of gas between said input and output lines is controlled by valve means, said valve means being controlled by said credit facility which causes said valve means to close when said credit facility determines that credit has expired,
characterised in that said valve means is provided with control means having an engagement mechanism which serves to disengage said control means upon expiry of credit, and engage said control means when credit is restored, thereby enabling said valve means to be manually operated to restore said gas supply.

2. A gas meter as claimed in Claim 1, wherein said credit facility operates to facilitate a flow of gas when it is in credit and further operates to facilitate prevention of said flow of gas when not in credit.

3. A gas meter as claimed in Claims 1 or 2, wherein said engagement mechanism comprises of a clutch and latch system and an input shaft which, when enabled, allows for manual operation of said valve means.

4. A gas meter as claimed in Claim 3, wherein said engagement mechanism becomes disabled after said valve means is successfully operated upon via said control means, resulting in said gas cut-off valve being in an open position, thereby preventing damage to said valve means due to unnecessary operation of said control means.

5. A gas meter as claimed in Claims 3 or 4, wherein said engagement mechanism includes a solenoid which serves to enable and disable said clutch and latch system, depending on the status of said credit facility.

6. A gas meter as claimed in any preceding Claim, wherein said control means is a winding handle.

7. A gas meter as claimed in any preceding Claim, wherein said valve means comprises of a pre-load device such as a coil spring and a single position mechanical ratchet, such that when said valve means is in an open configuration said coil spring is in a tensioned state.

8. A gas meter as claimed in Claim 7, wherein when said credit facility indicates no credit, said engagement mechanism acts upon said valve means causing said single mechanical position ratchet to release, thereby allowing said coil spring which is in a tensioned state to cause said gas cut-off valve to close and prevent a flow of gas.

9. A gas meter as claimed in Claim 8, wherein said coil spring has sufficient tension to maintain said gas cut-off valve in a closed position against standard gas pipeline pressure.

10. A method for controlling the flow of gas via a gas meter, said method comprising the steps of:
arranging a credit facility to cause an engagement mechanism to act upon a valve means to prevent a flow of gas, when said credit facility indicates no credit, and,
arranging said credit facility such that when credit is indicated, said credit facility causes said engagement mechanism to enable a control means to be manually operated, and subsequent upon said manual operation, said valve means is caused to open said gas cut-off valve, thereby allowing a flow of gas.
